(19) **Europäisches Patentamt**

**European Patent Office**

**Office européen des brevets**

(11) **EP 1 630 210 A1**

(12) **EUROPEAN PATENT APPLICATION**
published in accordance with Art. 158(3) EPC

(43) Date of publication:
**01.03.2006 Bulletin 2006/09**

(21) Application number: **04734743.0**

(22) Date of filing: **25.05.2004**

(51) Int Cl.:
***C09D 11/00*** (1968.09)        ***B41M 5/00*** (1968.09)
***B41J 2/01*** (1990.01)

(86) International application number:
**PCT/JP2004/007446**

(87) International publication number:
**WO 2004/106439 (09.12.2004 Gazette 2004/50)**

(84) Designated Contracting States:
**DE FR**

(30) Priority: **29.05.2003 JP 2003152224**

(71) Applicant: **SONY CORPORATION**
**Tokyo 141-0001 (JP)**

(72) Inventors:
• **SEKIGUCHI, Hideki,**
**c/o SONY CORPORATION,**
**Tokyo 141-0001 (JP)**

• **NAKASHINDEN, Hiroyuki,**
**c/o SONY CORPORATION,**
**Tokyo 141-0001 (JP)**
• **HIDA, Masanobu,**
**c/o SONY CORPORATION,**
**Tokyo 141-0001 (JP)**

(74) Representative: **Körber, Martin Hans**
**Mitscherlich & Partner,**
**Patent- und Rechtsanwälte,**
**Sonnenstrasse 33**
**80331 München (DE)**

(54) **RECORDING FLUID AND RECORDING METHOD USING THE SAME**

(57)    Disclosed is a recording liquid essentially composed of water, a coloring material, an organic solvent and a surfactant. The surfactant is composed of a specified ethylene oxide/ propylene oxide/ ethylene oxide block copolymer, a specified ethylene oxide/ butylene oxide/ ethylene oxide block copolymer or a specified propylene oxide/ ethylene oxide/ propylene oxide block copolymer. The recording liquid is superior in ejection stability and high in optical density even on multi-color recording letters/ characters or images on an ordinary paper sheet so that it allows for high quality recording free of boundary bleeding or all-over color unevennesses otherwise caused by color mixing.

EP 1 630 210 A1

## Description

Technical Field

This invention relates to a recording liquid used in a method of ejecting micro-sized liquid droplets via plural nozzles by way of recording. More particularly, it relates to a recording liquid superior in ejection stability, having a high optical density even on multi-color recording of a letter/ character or an image on a common grade paper sheet, such as copy sheet or a report pad, and enabling high quality recording free of bleeding in a boundary region or all-over color unevennesses otherwise caused by color mixing, and to a recording method employing this recording liquid.

The present invention contains subject matter related to Japanese Patent Application JP 2003-152224 filed in the Japanese Patent Office on May 29, 2003, the entire contents of which are incorporated herein by reference.

Background Art

There has so far been used an ink jet recording system, as a recording system in which micro-sized liquid droplets are ejected via plural nozzles by way of recording. This ink jet recording system is such a system in which the micro-sized liquid droplets are thrown out and deposited on a recording paper sheet, in accordance with a variety of operating principles, typified by a deflection system, a cavity system, a thermo-jet system, a bubble jet system, a thermal ink jet system, a slit jet system or a spark jet system, for recording an image or a letter/ character on the recording paper sheet.

Meanwhile, the recording liquid used in this ink jet recording system is required to be free from nozzle clogging. Recently, the presence of micro-sized bubbles, generated in the recording liquid, has come to attract notice as a possible cause of the nozzle clogging.

In general, a gas, such as air, is dissolved in the recording liquid. Since the solubility of such gas in the recording liquid is lowered with rise in temperature of the recording liquid, an amount of the gas which the recording liquid cannot afford to hold in a dissolved state is separated to form micro-sized bubbles in the recording liquid. More specifically, when the recording liquid present in a recording liquid holding tank, a recording liquid flow duct or in an ink jet head chip rises in temperature, the gas present in a dissolved state in the recording liquid is ejected to yield micro-sized bubbles. Should these micro-sized bubbles be present in the head chip, the result may be non-ejection of ink or non-optimum ink ejection such as a bend in the ink flight path. This may lead to blurring or to the white coming out state in the recorded image, thus significantly lowering the recording image quality. In particular, in a recording system in which the thermal energy is used to cause the flight of the micro-sized liquid droplets, that is, the thermal ink jet recording system, the recording liquid is heated rapidly by a heater and liquid droplets are ejected under the pressure of the gas bubbles generated on film boiling of the recording liquid, heat is stored in the vicinity of the heater, and hence the recording liquid present in the ink flow duct appreciably tends to rise in temperature, as a result of which the aforementioned problems are highly liable to be produced.

For coping with such lowering in the quality of the recorded image caused by these micro-sized bubbles, it has been proposed to add a propylene oxide adduct polymer of a lower alcohol to an aqueous pigment ink, as disclosed in the JP Laid-Open Patent Publication 2001-2964 or in JP Laid-Open Patent Publication H-10-46075. With this technique, it cannot be said that generation of micro-sized bubbles may be suppressed sufficiently, and hence a further improvement has been thought to be desirable. It has also been proposed to use an ethylene oxide/propylene oxide block copolymer as a recording liquid, as disclosed in the JP Laid-Open Patent Publication H-1-230685. However, with the recording liquid, employing this ethylene oxide/ propylene oxide block copolymer, foaming occurs to a non-negligible extent, such that, if micro-sized bubbles are left over in the recording liquid holding tank or in the ink flow duct, ejection stability is lowered, or non-ejection of ink occurs from time to time.

On the other hand, the recording liquid used in the ink jet recording system has been required not only to be free from nozzle clogging but also to be free from lowering in the optical density, blurring in the boundary region or all-over color unevennesses otherwise caused by color mixing, even in case recording is made on a common paper sheet, such as copy paper sheet or report pad (high-quality paper sheet).

For coping with this demand, it has been proposed in the JP Laid-Open Patent Publication 2001-154342 to use a water insoluble coloring material, treated with a high polymer material containing sulfonic acid (sulfonate) group and/or a high polymer material containing a phosphoric acid (phosphate) group, as the coloring material, and to add a high polymer material containing a carboxylic acid (calboxylate) group as a recording liquid, while it has been proposed in the JP Laid-Open Patent publication H-8-290656 to add alginic acid, having a D-mannuronic acid to L-mannuronic acid ratio in a range of 0.5 to 1.2, to the recording liquid. In addition, it has been proposed in the JP Laid-Open Patent publication H-8-193177 to add at least one surfactant selected from the group consisting of a fluorine-based surfactant and a silicon-based surfactant, and an alginate, to the recording liquid. However, the results achieved with the techniques disclosed in these Publications may not be said to be optimum, such that further improvement is thought to be desirable.

The aforementioned problems are felt more keenly in a so-called line head ink jet printer as proposed in e.g. the JP Laid-Open Patent Publications 2002-36522, 2001-315385 and 2001-301199, which provides for high speed recording. The reason is that, in an ink jet printer including one or more line heads extending at right angles to the feed direction of the recording paper sheet, for example, in a liquid ejecting device, including a flow duct arranged for traversing the feed direction of a printing support for conducting a recording liquid from a recording liquid holding tank, and also including a plural number of head chips each of which is provided with a plural number of nozzles on one or both sides of the flow duct, as contrasted to a conventional serial ink jet printer, in which a recording head is caused to sweep in a direction perpendicular to the feed direction of the recording paper sheet, micro-sized bubbles tend to be generated and are difficult to remove due to considerable heat evolution from the large number of ejection nozzles, to the increased distance from the recording liquid tank to the head chip, and to the intricate structure. On the other hand, the extremely short ejection period of liquid droplets of various colors entails the use of a recording liquid superior in permeability into the ink jet paper sheet. With use of a common grade paper sheet, the recording liquid seeps excessively along the direction of thickness of the paper sheet to deteriorate the optical density. In addition, since the liquid droplets of a color are supplied to the paper sheet before the liquid droplets of another color previously supplied has time to be penetrated sufficiently into the inside of the paper sheet, bleeding in a boundary region between different colors or all-over color unevennesses ascribable color mixing tend to be produced.

Disclosure of the Invention

It is an object of the present invention to provide a recording liquid superior in ejection stability and high in optical density even on multi-color recording letters/ characters or images on an ordinary paper sheet, such as a copy paper sheet or a report pad, thus allowing for high quality recording free of boundary bleeding or all-over color unevennesses otherwise caused by color mixing, and a recording method employing the recording liquid.

As a result of our perseverant researches, the present inventors have found that problems such as lowering of ejection stability caused by formation of micro-sized bubbles in e.g. a recording liquid charging tank, a flow duct or in a head chip, low optical density in case of ink jet printing with the use of an ordinary paper sheet, boundary bleeding between regions of different colors, or all-over color unevennesses ascribable to color mixing, can be successfully coped with, by containing a specified ethylene oxide/ alkylene oxide block copolymer, as a surfactant, in a recording liquid containing water, a coloring material and an organic solvent, without affecting e.g. intermittent (recursive) ejection. The present inventors have also found that, by optimizing the dynamic surface tension of the recording liquid, the state of the optical density, boundary bleeding, and all-over color unevennesses, otherwise caused by color mixing, may be improved further.

The recording liquid according to the present invention is essentially composed of water, a coloring material, an organic solvent and a surfactant, which surfactant contains at least one of an ethylene oxide/ propylene oxide block copolymer or an ethylene oxide/ butylene oxide block copolymer represented by the following chemical formulas (1) to (3):

$$HO(C_2H_4O)_l(C_3H_6L)_m(C_2H_4L)_nH \qquad (1)$$

where 1, m and n are integers such that $0 < 1 + n \leq 10$ and $16 \leq m \leq 31$ and the content of the ethylene oxide unit in a molecule is 10 to 20 wt%;

$$HO(C_2H_4O)_p(C_4H_8O)_q(C_2H_4O)_rH \qquad (2)$$

where p, q and r are integers such that $0 < p + r \leq 13$ and $13 \leq q \leq 24$ and the content of the ethylene oxide unit in a molecule is 10 to 30 wt%; and

$$HO(C_3H_6O)_x(C_2H_4O)_y(C_3H_6O)_zH \qquad (3)$$

where x, y and z are integers such that $12 \leq x + z \leq 31$ and $0 < y \leq 18$ and the content of the ethylene oxide unit in a molecule is 20 to 30 wt%.

Meanwhile, the block copolymers of the chemical formulas (1), (2) and (3) are sometimes referred to in the present specification as $EO_l/PO_m/EO_n$, $EO_p/BO_q/EO_r$ and $PO_x/EO_y/PO_z$, respectively.

The recording method according to the present invention for effecting recording by ejecting micro-sized droplets of a recording liquid via plural nozzles responsive to recording signals for deposition on a recording support, uses a recording liquid containing at least one of the ethylene oxide/ alkylene oxide block copolymers of the aforementioned chemical formula (1), (2) or (3) as a surfactant.

Other objects and advantages of the present invention will become more apparent from the following explanation of preferred embodiment thereof especially when read in conjunction with the drawings.

Best Mode for Carrying out the Invention

The recording liquid of the present invention will now be explained in detail.

The recording liquid according to the present invention contains water, a coloring material, an organic solvent and a surfactant. Of these, the surfactant used in the recording liquid is at least one of nonionic surfactants of the Pluronic (trade mark) type represented by the above indicated chemical formula (1), (2) or (3). The result is that, with the recording liquid of the present invention, the image obtained on ink jet printing on a common grade paper sheet is higher in optical density, while suffering from bleeding in a boundary region or all-over color unevennesses due to color mixing only to a lesser extent. In addition, the problem associated with nozzle clogging caused by micro-sized bubbles, contained in the recording liquid, may be eliminated.

Scrutiny into foaming properties of the recording liquid of the present invention, in terms of the foaming power and foam stability as provided in JIS 3362-1998, revealed that the foaming power was approximately not larger than 50 mm, while the foam stability was approximately not larger than approximately 5 mm. Conversely, with the recording liquid employing the ethylene oxide/propylene oxide block copolymer, stated in JP Laid-Open Patent Publications H-1-230685 and 2000-154342, the foaming power and foam stability were approximately not less than 80 mm and approximately not less than approximately 10 mm, which were both unsatisfactory.

In the chemical formula (1), 1, m and n are integers satisfying the relationship of $0 < 1 + n \leq 10$ and $16 \leq m \leq 31$. If the sum of 1 and n, that is, $(1 + n)$, indicating the number of repetitive units of ethylene oxide, exceeds 10, the foaming properties of the recording liquid are increased, such that air bubbles are accumulated in the tank charged with the recording liquid or in a flow duct up to the head, thus producing inconveniences such as disturbed ejecting directions or non-ejection from time to time. On the other hand, if the value of n, indicating the number of repetitive units of propylene oxide, exceeds 31, the recording liquid is higher in viscosity and inferior in intermittent (recursive) ejection performance, because of the excessively high molecular weight of the ethylene oxide/ propylene oxide block copolymer. In addition, if the value of m is less than 16, it may be an occurrence that, with the ordinary paper sheet, the bleeding in the boundary area between different color regions or all-over color unevennesses ascribable to color mixing cannot be improved satisfactorily, in a manner deterrent to achieving the object of the present invention,.

In the chemical formula (1), the content of an ethylene oxide unit in a molecule of the chemical formula (1) amounts to 10 to 20 wt%. In case the content of the ethylene oxide unit is below this range, the ethylene oxide/ propylene oxide block copolymer becomes inferior in solubility in water and the two units may be separated from each other in the recording liquid to deteriorate ejection stability. If conversely the content of an ethylene oxide unit exceeds the above range, the foaming properties of the recording liquid undesirably become higher.

In the chemical formula (2), p, q and r are integers satisfying the relationship of $0 < p + r \leq 13$ and $13 \leq q \leq 24$. If the sum of p and r, that is, $(p + r)$, indicating the number of repetitive units of ethylene oxide, exceeds 13, the foaming properties of the recording liquid are increased, such that air bubbles are accumulated in the tank charged with the recording liquid or in a flow duct up to the head, thus producing inconveniences such as disturbed ejecting directions or non-ejection from time to time. On the other hand, if the value of q, indicating the number of repetitive units of butylene oxide, exceeds 24, the recording liquid becomes higher in viscosity and in inferior in intermittent (recursive) ejection performance, because of the excessively high molecular weight of the ethylene oxide/ propylene oxide block copolymer. Moreover, if the ordinary paper sheet is used, the drying or fixing speed is lowered undesirably. On the other hand, if q is less than 13, bleeding in the boundary area between different color regions or all-over color unevennesses ascribable to color mixing, in the case of the ordinary paper sheet, cannot be improved satisfactorily, in a manner deterrent to achieving the object of the present invention.

In the chemical formula (2), the content of an ethylene oxide unit in a molecule of the chemical formula (2) is 10 to 30 wt%. In case the content of the ethylene oxide unit is below this range, the ethylene oxide/ butylene oxide block copolymer becomes inferior in solubility in water and the two units may occasionally be separated from each other in the recording liquid to deteriorate the ejection stability. If conversely the content of an ethylene oxide unit exceeds the above range, the foaming properties of the recording liquid undesirably become higher.

In the chemical formula (3), x, y and z are integers satisfying the relationship of $12 \leq x + z \leq 31$ and $0 < y \leq 18$. If the value of y, indicating the number of repetitive units of ethylene oxide, exceeds 18, the tendency to foaming of the recording liquid is increased, such that air bubbles are accumulated in the tank charged with the recording liquid or in a flow duct up to the head, thus producing inconveniences such as disturbed ejecting directions or non-ejection of ink. On the other hand, if the value of the sum of x and z or $(x + z)$, indicating the number of repetitive units of propylene oxide, exceeds 31, the recording liquid becomes higher in viscosity and in intermittent (recursive) ejection performance. In case the ordinary paper sheet is used, the drying or fixing speed is undesirably lowered. On the other hand, if $(x + z)$ is less than 12, it may be an occurrence that bleeding in the boundary area between different color regions or all-over color unevennesses ascribable to color mixing, cannot be satisfactorily improved in the case of the ordinary paper sheet, in a manner deterrent to achieving the object of the present invention.

In the chemical formula (3), the content of an ethylene oxide unit in a molecule of the chemical formula amounts to 20 to 30 wt%. In case the content of the ethylene oxide unit is below this range, the ethylene oxide/ propylene oxide block copolymer becomes inferior in solubility in water and the two units may occasionally be separated from each other in the recording liquid to deteriorate the ejection stability. If conversely the content of an ethylene oxide unit exceeds the above range, the foaming properties of the recording liquid undesirably become higher.

The block copolymers, particularly usable with advantage in the recording liquid of the present invention, are shown below. It is noted that $(1 + n)$, m, $(p + r)$, q, $(x + z)$ and y denote integers.

Preferred examples of $EO_l/PO_m/EO_n$ of the chemical formula (1) include those where $(1 + n)/m$ is 3~ 5/16, 3~ 5/17, 3~ 5/18, 3~ 6/19, 3~ 6/20, 4~ 6/21, 4 ~ 7/22, 4~ 7/23, 4~ 7/24, 4~ 8/25,4~ 8/26, 4~ 8/27, 5~ 9/28, 5~ 9/29, 5~ 9/30 and 5~ 10/31.

Preferred examples of $EO_p/BO_q/EO_r$ of the chemical formula (2) include those where $(p + r)/q$ is 2~ 7/13, 3~ 7/14, 3~ 8/15, 3~ 9/16, 3~ 9/17, 3~ 10/18, 3 ~ 10/ 19, 3~ 11/20, 4~ 11/21, 4~ 12/22, 4~ 13/23 and 4~ 13/24.

Preferred examples of $PO_x/EO_y/PO_z$ of the chemical formula (3) include those where $(x + z)/y$ is 4~ 6/12, 5~ 7/13, 5~ 7/14, 5~ 8/15, 6~ 9/16, 6~ 9/17, 6 ~ 10/18, 7~ 10/19, 7~ 11/20, 7~ 11/21, 8~ 12/22, 8~ 13/23, 8~ 13/24, 9~ 14/25, 9~ 14/26, 9~ 15/27, 10~ 15/28, 10~ 16/29, 10~ 16/30, and 11~ 17/31.

The weight average molecular weight of the ethylene oxide/ alkylene oxide block copolymer of the chemical formula (1), (2) or (3) preferably ranges between 800 and 2600.

The amount of addition of the ethylene oxide/ alkylene oxide block copolymer of the chemical formula (1), (2) or (3) to the recording liquid is preferably 0.1 to 5 wt% and more preferably 0.3 to 3 wt%, in consideration that, in case the amount of addition is too small, the ejection stability cannot be improved satisfactorily, while the bleeding in the boundary area or all-over color unevennesses caused by color mixing, in case of printing on an ordinary paper sheet, cannot be improved satisfactorily, whereas, in case the amount of addition is excessive, the optical density following the printing may undesirably be lowered.

If, with the recording liquid of the present invention, the dynamic surface tension at 25ºC satisfies the following equation (i):

$$35 \leq \gamma_{20} \text{ and } \gamma_i \leq 40$$

$$\cdots\cdots(i)$$

where $\gamma_{20}$ (mN/m) and $\gamma_i$ (mN/m) denote the dynamic surface tension at 20 Hz and that at 1 Hz, respectively.

Although the reason is not quite clear, it may be inferred that, in conjunction with the favorable effect of the ethylene oxide/ alkylene oxide block copolymer of the present invention, the speed of permeation of the recording liquid into the bulk of the ordinary paper sheet, in other words, the spreading of the recording liquid along the transverse and depth-wise directions along the pulp fibers in the bulk of the ordinary paper sheet, has become uniform and adequate.

These values of the dynamic surface tension may be measured by a dynamic surface tension meter prepared on the basis of a well-known measurement principle for measuring the dynamic surface tension, as disclosed for example in JP Laid-Open Patent Publication 63-31237. Specifically, a dynamic surface tension meter by the maximum bubble pressure method, manufactured by KRUSS under the trade name of BP-2, or one manufactured by LAUDA under the trade name of MPT-2, may be used. There is also a dynamic surface tension meter by the vibration jet method, manufactured by KYOWA KAIMEN KAGAKU SHA, under the trade name of JET-2.

Basically, the dynamic surface tension of the recording liquid in the present invention may be adjusted by changing the particular compound and the amount of addition of the ethylene oxide/ alkylene oxide block copolymer of the aforementioned chemical formula (1), (2) or (3). However, if satisfactory adjustment is difficult, other surfactants, well-known per se, may be used within the scope not deterrent to achieving the object of the present invention. These other known surfactants may be enumerated by, for example, alkyl ether type non-ionic surfactants, such as lauryl alcohol alkoxylate, oleyl alcohol ethoxylate, primary alcohol ethoxylate and secondary alcohol ethoxylate, special phenol type nonionic surfactants, such as polycyclic phenol ethoxylate, ethylene oxide adducts of glycerides, ester type nonionic surfactants, such as polyethylene glycol oleate, polyoxy alkylene taloate, sorbitan oleyl ester and polyoxyethylene sorbitan oleyl ester, amide type nonionic surfactants, such as coconut oil fatty acid diethanol amide and polyoxyethylene coconut oil fatty acid monoethanol amide, acetylene glycol and ethylene oxide adducts thereof, anionic surfactants, such as alcohol sulfate sodium salt, higher alcohol sulfate sodium salt, polyoxyethylene alkyl phenyl ether sulfuric acid ester ammonium salt, and sodium alkylbenzene sulfonate, cationic surfactants, such as mono long chain alkyl cation, di long chain alkyl cation, and alkylamine oxide, and amphoteric surfactants, such as laurylamidopropyl acetic acid betaine or laurylamino acetic acid betaine. It is noted that the amount of addition of other surfactants is not more than 40% and preferably not more than 20% based on the weight mass of the ethylene oxide/alkylene oxide block copolymer of the present invention, added to the recording liquid. If these other surfactants are added in an amount exceeding 40%, the optical density may be lowered, while bleeding in the boundary region between different colors or all-over color unevennesses ascribable to color mixing may undesirably be produced, even though only from time to time. However, this may not be said to hold monistically.

As the coloring material that makes up the recording liquid according to the present invention, any well-known dyes, pigments or colored fine polymer particles may be used either alone or in combination. In particular, water-soluble dyes are preferred. As the water-soluble dyes, any of acidic dyes, direct dyes, basic dyes, reactive dyes or edible dyes may be used. These dyes may be selected from the perspective of solubility in water, coloring properties and fastness.

Preferred examples of the water-soluble dyes are given below, only by way of illustration. For example, the water-soluble dyes may be enumerated by C.I. Acid Yellow 17, 23, 42, 44, 79, 142; C.I. Acid Red 1, 8, 13, 14, 18, 26, 27, 35, 37, 42, 52, 82, 87, 89, 92, 97, 106, 111, 114, 115, 134, 186, 249, 254, 289; C.I. Acid Blue 9, 29, 45, 92, 249; C.I. Acid Black 1, 2, 7, 24, 26, 94; C.I, Food Yellow 3, 4; C.I. Food Red 7, 9, 14; C.I. Food Black 1, 2; C.I. Direct yellow 1, 12, 24, 26, 33, 44, 50, 86, 120, 132, 142, 144; C.I. Direct Red 1, 4, 9, 13, 17, 20, 28, 31, 39, 80, 81, 83, 89, 225, 227; C.I. Direct Orange 26, 29, 62, 102; C.I. Direct Blue 1, 2, 6, 15, 22, 25, 71, 76, 79, 86, 87, 90, 98, 163, 165, 199, 202; Direct Black 19, 22, 32, 38, 51, 56, 71, 74, 75, 77, 154, 168, 171; C.I. Basic Yellow 1, 2, 11, 13, 14, 15, 19, 21, 23, 24, 25, 28, 29, 32, 36, 40, 41, 45, 49, 51, 53, 63, 64, 65, 67, 70, 73, 77, 87, 91; C.I. Basic Red 2, 12, 13, 14, 15, 18, 22, 23, 24, 27, 29, 35, 36, 38, 39, 46, 49, 51, 52, 54, 59, 68, 69, 70, 73, 78, 82, 102, 104, 109, 112; C.I. Basic Blue 1, 3, 5, 7, 9, 21, 22, 26, 35, 41, 45, 47, 54, 62, 65, 66, 67, 69, 75, 77, 78, 89, 92, 93, 105, 1 17, 120, 1 22, 124, 129, 137, 141, 147, 155; C.I. Basic Black 2, 8; C.I. Reactive Black 3, 4, 7, 11, 12, 17; C.I. Reactive Yellow 1, 5, 11, 13, 14, 20, 21, 22, 25, 40, 47, 51, 55, 65, 67; C.I. Reactive Red 1, 14, 17, 25, 26, 32, 37, 44, 46, 55, 60, 66, 74, 79, 96, 97; and C.I. Reactive Blue 1, 2, 7, 14, 15, 23, 32, 35, 38, 41, 63, 80 and 95.

The amount of addition of the coloring material in the recording liquid of the present invention is preferably 1 to 10 wt% and preferably 3 to 5 wt% based on the total weight mass of the recording liquid, and is determined as the viscosity, drying performance, ejection stability or coloring performance of the recording liquid, as well as storage stability of the printed material, is taken into account.

Although the recording liquid of the present invention uses water as a solvent, any suitable known organic solvents may be used either alone or in combination, for the purpose of imparting desirable physical properties to the recording liquid, improving solubility or dispersibility of the coloring material in water or preventing drying of the recording liquid.

Preferred examples of the organic solvents are given below, only by way of illustration. That is, the organic solvents may be enumerated by lower alcohols, such as ethanol or 2-propanol, polyhydric alcohols, such as ethylelne glycol, diethylelne glycol, triethylene glycol, polyethylene glycol, polypropylene glycol, 1,5- pentanediol, 1,6- hexanediol, glycerin, 1,2,6- hexanetriol, 1,2,4- butanetriol or petriol, polyhydric alcohol alkylethers, such as ethyleneglycol monoethylether, ethyleneglycol monobutylether, diethyleneglycol monomethylether, diethyleneglycol monoethylether, diethyleneglycol monobutylether, tetraethyleneglycol monomethylether or propyleneglycol monoethylether, polyhydric alcohol allylethers, such as ethyleneglycol monophenylether or ethyleneglycol monobenzylether, nitrogen-containing heterocyclic compounds, such as N-methyl-2-pyrrolidone, N-hydroxyethyl-pyrrolidone, 1,3-dimethylimidazoylidinone, ε-caprolactum or γ-butyrolactone, amides, such as formamide, N-methylformamide or N,N- dimethylformamide, amines, such as monoethanolamine, diethanolamine, triethanolamine, monoethylamine, diethylamine or triethylamine, and sulfur-containing compounds, such as dimethyl sulfoxide, sulforane or thiodiethanol.

The amount of addition of the organic solvent in the recording liquid according to the present invention is 5 to 50 wt% and preferably 10 to 35 wt% based on the total weight of the recording liquid and, as in the case of the coloring material, is determined as the viscosity, drying performance or ejection stability of the recording liquid are taken into account.

The recording liquid according to the present invention may suitably be added by a pH adjustment agent, including amines, such as diethanolamine or triethanolamine, hydroxides of alkali metal elements, such as lithium hydroxide, sodium hydroxide or potassium hydroxide, ammonium hydroxide, quaternary ammonium hydroxide or quaternary phosphonium hydroxide, or carbonates of alkali metals, such as lithium carbonate, sodium carbonate or potassium carbonate, chelate reagents, such as ethylenediamine sodium tetraacetate, nitrilo sodium triacetate, hydroxyethyl ethylenediamine sodium triacetate, diethylene triamine sodium pentaacetate, or uramil sodium diacetate, antiseptics, such as dihydrosodium acetate, sodium sorbinate, 2-pyridinethiol-1-oxide sodium, sodium benzoate or pentachloro phenol sodium, anti-rusting agents, such as acidic sulfites, sodium thiosulfate, ammon thiodiglycolate, diisopropyl ammonium nitrite, pentaerythritol tetranitrate or dicyclohexyl ammonium nitrite, or UV ray absorbers, as proposed for example in JP Laid-Open Patent Publication H-9-227811.

The recording liquid of the present invention may be applied with advantage to a recording method in which micro-sized liquid droplets are ejected from plural nozzles responsive to a recording signal to effectuate the recording. The recording method may be exemplified by a so-called piezo system in which micro-sized liquid droplets are flown by exploiting the vibrations of e.g. a piezoelectric element, as disclosed in JP Laid-Open Patent Publications S-55-65559, S62-160243 and H2-270561, a so-called thermal system in which micro-sized liquid droplets are flown by acting thermal energy thereon, as disclosed in Journal of Society of Television Engineering, vol.37, number 2 (1983) pages 118 to 123 and in Journal of Association of Electronic Photography, vol.22, number 2 (1984), pages 56 to 66, and by a well-known ink jet recording system.

The recording liquid according to the present invention may be applied to a serial ink jet printer. However, the recording liquid according to the present invention may, in particular, be applied with advantage to an ink jet printer having a line head (see, for example, the JP Patents 2783288, 2863207, 3114776 and 3347493, and JP Laid-Open Patent Publication 2002-240300, 2002-292859, 2002-307666 and 2002-36522), because the recording liquid is effective to solve the problem inherent in such line head ink jet printer, namely the deterioration in ejection stability or optical density, bleeding in the boundary region or all-over color unevennesses otherwise caused by color mixing. For example, the recording liquid of the present invention allows optimum ink jet recording to be performed on a line head ink jet printer in which a flow duct conducting the recording liquid from a tank filled with the recording liquid in a direction substantially perpendicular to the feed direction of a printing support, namely an ink jet recording paper sheet, inclusive of an ordinary paper sheet, and in which plural head chips are alternately arranged on both sides of the flow duct to allow for high speed recording as well as to raise the printing resolution despite a simple head structure (see JP Laid-Open Patent Publication 2002-36522).

[Examples]

The present invention will now be explained by referring to certain Examples which are given only by way of illustration of the invention. In the following Examples, parts and % denote weight parts and wt%, respectively, unless otherwise specified.

Example 1

The ingredients, indicated in the following Tables 1 and 2, were mixed together and filtered through a membrane filter, with a pore size of $22\mu m$, manufactured by MILLIPORE INC. under the trade name of Millex-0.22, to yield recording liquids of magenta and cyan. These recording liquids were named a recording liquid set of Example 1.

Table 1

| Ingredients | (Magenta) | Parts by mass weight |
|---|---|---|
| C.I. Acid Red 52 | | 3.5 |
| Glycerin | | 10.0 |
| Diethyleneglycol | | 5.0 |
| $EO_l/PO_m/EO_n$ | $(1+n) = 3, m = 16$ | 2.0 |
| Water | | 79.5 |

Table 2

| Ingredients | (Cyan) | Parts by mass weight |
|---|---|---|
| C.I. Direct Blue 199 | | 3.5 |
| Glycerin | | 10.0 |
| Diethyleneglycol | | 5.0 |
| $EO_1/PO_m/EO_n$ | $(1+n) = 3, m = 16$ | 2.0 |
| Water | | 79.5 |

The dynamic surface tension of the recording liquid set of Example 1 was measured, using BP-2 of KRUSS INC., under the measurement conditions of the capillary diameter of 0.215 mm and the temperature of 25°C. It was found that, with the magenta recording liquid, $\gamma_{20} = 41.5$ mN/m and $\gamma_1 = 38.6$ mN/m, whereas, with the cyan recording liquid, $\gamma_{20} = 42.5$ mN/m and $\gamma_1 = 39.3$ mN/m.

Examples 2 to 9

The recording liquid sets for the Examples 2 to 9 were obtained by repeating the operations of Example 1, except changing $(1 + n)$ and m of $EO_l/PO_m/EO_n$ as indicated in Table 3.

Comparative Examples 1 to 6

The recording liquid sets for the Comparative Examples 1 to 6 were obtained in the same manner as in Example 1, except changing $(1 + n)$ and m of $EO_l/PO_m/Eo_n$ as indicated in Table 3.

Table 3

| Examples and Comparative Examples | Particular Compounds of Recording Liquid | $EO_l/PO_m/EO_n$ | | | | | |
|---|---|---|---|---|---|---|---|
| | | $1 + n$ | m | Ratio of molecular weight of EO (%) | Quantity of addition (parts) | Dynamic surface tension (mN/m) | |
| | | | | | | $\gamma_{20}$ | $\gamma_1$ |
| Example 1 | Magenta | 3 | 16 | 12.5 | 0.5 | 41.5 | 38.6 |
| | Cyan | ↑ | ↑ | ↑ | 0.5 | 42.5 | 39.3 |
| Example 2 | Magenta | 3 | 16 | 12.5 | 1.0 | 38.9 | 36.1 |
| | Cyan | ↑ | ↑ | ↑ | 1.0 | 38.3 | 35.3 |
| Example 3 | Magenta | 3 | 16 | 12.5 | 2.5 | 32.1 | 29.5 |
| | Cyan | ↑ | ↑ | ↑ | 2.7 | 32.0 | 29.3 |
| Example 4 | Magenta | 6 | 20 | 18.5 | 0.5 | 44.1 | 40.5 |
| | Cyan | ↑ | ↑ | ↑ | 0.5 | 44.3 | 40.5 |
| Example 5 | Magenta | 6 | 20 | 18.5 | 1.0 | 39.1 | 36.5 |
| | Cyan | ↑ | ↑ | ↑ | 1.0 | 39.3 | 36.5 |
| Example 6 | Magenta | 6 | 20 | 18.5 | 2.5 | 33.1 | 30.5 |
| | Cyan | ↑ | ↑ | ↑ | 2.5 | 33.3 | 30.5 |
| Example 7 | Magenta | 5 | 16 | 19.2 | 1.3 | 38.1 | 35.5 |
| | Cyan | ↑ | ↑ | ↑ | 1.3 | 38.4 | 35.3 |
| Example 8 | Magenta | 5 | 30 | 11.2 | 1.0 | 45.9 | 40.6 |
| | Cyan | ↑ | ↑ | ↑ | 1.0 | 45.5 | 40.0 |
| Example 9 | Magenta | 9 | 30 | 18.5 | 1.0 | 44.9 | 40.1 |
| | Cyan | ↑ | ↑ | ↑ | 1.0 | 44.3 | 40.3 |
| Comparative Example 1 | Magenta | 20 | 10 | 60.3 | 3.0 | 39.2 | 36.1 |
| | Cyan | ↑ | ↑ | ↑ | 3.1 | 39.3 | 36.0 |
| Comparative Example 2 | Magenta | 7 | 16 | 24.9 | 2.0 | 42.3 | 38.2 |
| | Cyan | ↑ | ↑ | ↑ | 2.0 | 42.5 | 38.0 |
| Comparative Example 3 | Magenta | 6 | 1 | 82.0 | 3.0 | 48.1 | 45.6 |
| | Cyan | ↑ | ↑ | ↑ | 3.0 | 46.6 | 43.6 |
| Comparative Example 4 | Magenta | Not added ↑ | | | 0.0 | 60.1 | 59.8 |
| | Cyan | | | | 0.0 | 60.3 | 60.1 |
| Comparative Example 5 | Magenta | 11 | 20 | 29.4 | 3.0 | 40.0 | 36.9 |
| | Cyan | ↑ | ↑ | ↑ | 3.0 | 40.1 | 37.1 |
| Comparative Example 6 | Magenta | 12 | 35 | 20.6 | 2.5 | 37.1 | 34.0 |
| | Cyan | ↑ | ↑ | ↑ | 2.5 | 37.2 | 34.0 |

Examples 10 to 16

The recording liquid sets for the Examples 10 to 16 were obtained by repeating the operations of Example 1, except changing the ethylene oxide/alkylene oxide block copolymer to $EO_p/BO_q/EO_r$ and setting $(p + r)$ and q as indicated in Table 4.

Comparative Examples 7 to 9

The recording liquid sets for the Comparative Examples 7 to 9 were obtained by repeating the operations of Example 1, except setting (p + r) and q in $EO_p/BO_q/EO_r$ as indicated in Table 4.

Table 4

| EO_p/BO_q/EO_r | | | | | | | |
|---|---|---|---|---|---|---|---|
| Examples and Comparative Examples | Particular Compounds of Recording Liquid | p + n | q | Ratio of molecular weight of EO (%) | Quantity of addition (parts) | Dynamic surface tension (mN/m) | |
| | | | | | | $\gamma_{20}$ | $\gamma_1$ |
| Example 10 | Magenta | 2 | 13 | 10.5 | 0.5 | 43.4 | 40.6 |
| | Cyan | ↑ | ↑ | ↑ | 0.5 | 43.5 | 40.4 |
| Example 11 | Magenta | 2 | 13 | 10.5 | 1.0 | 39.4 | 36.6 |
| | Cyan | ↑ | ↑ | ↑ | 1.1 | 37.5 | 35.4 |
| Example 12 | Magenta | 2 | 13 | 10.5 | 2.4 | 33.4 | 29.6 |
| | Cyan | ↑ | ↑ | ↑ | 2.4 | 33.5 | 29.4 |
| Example 13 | Magenta | 7 | 13 | 29.0 | 1.4 | 37.7 | 35.0 |
| | Cyan | ↑ | ↑ | ↑ | 1.5 | 37.4 | 35.2 |
| Example 14 | Magenta | 8 | 22 | 21.6 | 1.5 | 36.3 | 32.0 |
| | Cyan | ↑ | ↑ | ↑ | 1.5 | 36.2 | 32.1 |
| Example 15 | Magenta | 4 | 24 | 11.2 | 0.5 | 42.0 | 38.3 |
| | Cyan | ↑ | ↑ | ↑ | 0.5 | 42.0 | 38.4 |
| Example 16 | Magenta | 13 | 24 | 29.1 | 0.5 | 44.5 | 41.1 |
| | Cyan | ↑ | ↑ | ↑ | 0.5 | 44.4 | 41.4 |
| Comparative Example 7 | Magenta | 23 | 16 | 46.8 | 3.5 | 39.8 | 35.6 |
| | Cyan | ↑ | ↑ | ↑ | 3.5 | 39.5 | 35.2 |
| Comparative Example 8 | Magenta | 11 | 28 | 19.4 | 1.0 | 38.9 | 35.6 |
| | Cyan | ↑ | ↑ | ↑ | 1.1 | 38.7 | 35.6 |
| Comparative Example 9 | Magenta | 1 | 9 | 6.4 | 0.5 | 37.5 | 35.0 |
| | Cyan | ↑ | ↑ | ↑ | 0.5 | 37.0 | 35.1 |

Examples 17 to 25

The recording liquid sets for the Examples 17 to 25 were obtained in the same way as in preparing the recording liquid set of Example 1, except changing the ethylene oxide/ alkylene oxide block copolymer of the present invention to $PO_x/EO_y/PO_z$ and setting (x + z) and y as indicated in Table 5.

Comparative Examples 10 to 12

The recording liquid sets for the Comparative Examples 10 to 12 were obtained by repeating the operations of Example 1, except changing (x + z) and y of $PO_x/EO_y/PO_z$ as indicated in Table 5.

Table 5

| Examples and Comparative Examples | Particular Compounds of Recording Liquid | $PO_x/EO_y/PO_z$ | | | | | |
| --- | --- | --- | --- | --- | --- | --- | --- |
| | | x + z | q | Ratio of molecular weight of EO (%) | Quantity of addition (parts) | Dynamic surface tension (mN/m) | |
| | | | | | | $\gamma_{20}$ | $\gamma_1$ |
| Example 17 | Magenta | 12 | 4 | 20.2 | 0.5 | 42.5 | 39.5 |
| | Cyan | ↑ | ↑ | ↑ | 0.5 | 42.4 | 39.3 |
| Example 18 | Magenta | 12 | 4 | 20.2 | 1.0 | 38.5 | 35.5 |
| | Cyan | ↑ | ↑ | ↑ | 1.0 | 37.4 | 35.3 |
| Example 19 | Magenta | 12 | 4 | 20.2 | 2.8 | 32.5 | 27.5 |
| | Cyan | ↑ | ↑ | ↑ | 2.8 | 32.4 | 27.3 |
| Example 20 | Magenta | 17 | 8 | 26.3 | 1.5 | 41.6 | 38.3 |
| | Cyan | ↑ | ↑ | ↑ | 1.5 | 41.5 | 38.5 |
| Example 21 | Magenta | 24 | 10 | 24.0 | 1.9 | 37.6 | 35.0 |
| | Cyan | ↑ | ↑ | ↑ | 1.9 | 37.6 | 35.1 |
| Example 22 | Magenta | 31 | 11 | 21.2 | 0.5 | 45.5 | 39.5 |
| | Cyan | ↑ | ↑ | ↑ | 0.5 | 44.4 | 38.3 |
| Example 23 | Magenta | 31 | 17 | 29.4 | 0.5 | 45.8 | 42.5 |
| | Cyan | ↑ | ↑ | ↑ | 0.5 | 45.5 | 42.3 |
| Example 24 | Magenta | 31 | 17 | 29.4 | 1.5 | 38.8 | 35.5 |
| | Cyan | ↑↑ | ↑ | ↑ | 1.5 | 38.5 | 35.3 |
| Example 25 | Magenta | 31 | 17 | 29.4 | 3.2 | 35.8 | 32.5 |
| | Cyan | ↑ | ↑ | ↑ | 3.3 | 35.5 | 32.3 |
| Comparative Example 10 | Magenta | 17 | 22 | 49.5 | 1.5 | 41.5 | 38.9 |
| | Cyan | ↑ | ↑ | ↑ | 1.5 | 42.0 | 39.0 |
| Comparative Example 11 | Magenta | 31 | 27 | 39.8 | 1.5 | 44.0 | 39.9 |
| | Cyan | ↑ | ↑ | ↑ | 1.5 | 44.1 | 40.0 |
| Comparative Example 12 | Magenta | 47 | 15 | 19.5 | 1.0 | 39.8 | 36.0 |
| | Cyan | ↑ | ↑ | ↑ | 1.0 | 39.0 | 35.0 |

Comparative Examples 13 to 16

The recording liquid sets for the Comparative Examples 13 to 16 were obtained by repeating the operations of Example 1, except changing the particular compounds and the amounts of addition as indicated in Table 6.

Table 6

| Examples and Comparative Examples | Particular Compounds of Recording Liquid | Quantity of addition (parts) | Dynamic surface tension (mN/m) | | Sort of surfactant |
| --- | --- | --- | --- | --- | --- |
| | | | $\gamma_{20}$ | $\gamma_1$ | |
| Comparative Example 13 | Magenta | 0.1 | 38.7 | 35.0 | UNION 275-40 manufactured by SHIN-NIHON-RIKA Co. Ltd.; lauryl alcoholethoxylate |
| | Cyan | 0.1 | 38.6 | 35.0 | |
| Comparative | Magenta | 0.4 | 39.9 | 36.5 | ORFIN E1010 |

Table continued

| Examples and Comparative Examples | Particular Compounds of Recording Liquid | Quantity of addition (parts) | Dynamic surface tension (mN/m) | | Sort of surfactant |
|---|---|---|---|---|---|
| | | | $\gamma_{20}$ | $\gamma_1$ | |
| Example 14 | Cyan | 0.4 | 40.0 | 36.5 | manufactured by NISSHIN KAGAKU KOGYO Co. Ltd.; ethylene oxide adduct of acetylene glycol |
| Comparative Example 15 | Magenta<br>Cyan | 5.0<br>5.0 | 50.8<br>50.1 | 45.0<br>45.1 | SORBITOL EO(6) manufactured by MIYOSHI YUSHI Co. Ltd.; ethylene oxide adduct of sorbitan ester |
| Comparative Example 16 | Magenta<br>Cyan | 1.0<br>1.0 | 39.1<br>39.0 | 35.3<br>35.1 | NONION EH208 manufactured by NIPPON YUSHI Co. Ltd.; ethylene oxide adduct of 2-ethylhexyl ester |

(Evaluation)

The recording liquid sets of the Examples 1 to 25 and the Comparative Examples 1 to 16 were evaluated by the following method. The results of the evaluation are collectively shown in Tables 7 to 10.

(1) Ejection Stability (Foaming and Disturbances in Image)

From a main body unit of the line printer, as proposed in JP Laid-Open Patent Publication 2002-36522 (having a line head of a transverse width corresponding to the A4-format and a resolution equal to 600 dpi), a head cartridge, made up of a line head to which is unified a tank to be charged with the recording liquid, was dismounted, and sets of the magenta recording liquid and the cyan recording liquid of the Examples of the present invention and the Comparative Examples were charged into the recording liquid charging tank. It is noted that each recording liquid is led from the charging tank through a flow duct into the interior of the head chip. The head cartridge was stored for five days in an environment of 10ºC and 50% RH and then stored for five days in an environment of 40ºC and 50% RH. The head cartridge was then returned to an environment of 20ºC and 50% RH. The head cartridge was then mounted on the main body unit of the line printer and all-over printing with single colors was carried out on a commercial copy sheet (manufactured by RICOH Co. Ltd. under the trade name of 'My Paper'). Directly after printing, the head cartridge was dismounted from the main body unit of the line printer and the recording liquid in the head was visually checked for the possible presence of bubbles. The following evaluation was made of the state of disturbance of the image and the state of bubbles in the recording liquid in the head at this time.

(Rank and Standard for Evaluation)

◎ No white coming out state is seen in the all-over printed region in its entirety, while no bubbles are seen in the head chip
○ A small quantity of bubbles are seen in the head chip and the white coming out state is seen only to a minor extent, but the image quality remains substantially unaffected
Δ The white coming out state is seen partially and micro-sized bubbles may be seen in the head chip
✕ The white coming out state is outstanding and the image of all-over printing is lowered in quality, while many micro-sized bubbles are seen in the head chip

(2) Ejection Stability (Intermittent Ejection properties)

A line printer, charged with a set of a magenta recording liquid and a cyan recording liquid of each of Examples and Comparative Examples, was left over for ten minutes in an environment of 25°C and 10% RH, with its head cartridge cover removed, and was used for single-color all-over printing on a commercial copy sheet, manufactured by RICOH Co. Ltd. under the trade name of 'My Paper'. The blurred states of the image were evaluated as follows by visual check.

(Rank and Standard for Evaluation)

○ The all-over printed image part was clear and free of blurring
Δ Blurring is seen partially
× Blurring is seen in the entire image and the all-over printed image is drastically inferior in quality

(3) Optical Density

Using a line printer, charged with only the magenta recording liquid of each of the Examples and Comparative Examples, single-color all-over printing was made on a commercial PPC paper sheet, manufactured by RICOH Co. Ltd. under the trade name of 'My Paper'. The reflective optical density of the single-color all-over printing was measured with Macbeth TR924.

(4) Boundary Bleeding

Using a line printer, charged with a set of the magenta recording liquid and the cyan recording liquid of each of the Examples and the Comparative Examples, single-color all-over printing was made with each adjacent color on a commercial PPC paper sheet, manufactured by RICOH Co. Ltd. under the trade name of 'My Paper'. The state of bleeding of the boundary image portions at this time was evaluated as follows by visual check.

(Rank and Standard of Evaluation)

◎ There is noticed no bleeding in the boundary regions between the magenta and cyan colors
○ Although there is minor bleeding in the boundary regions between the magenta and cyan colors, such minor bleeding is not seen to be detrimental to the image quality
Δ Boundary bleeding of a larger size is seen from place to place
× Boundary bleeding is seen in the entire image and the image quality is lowered severely

(5) All-over color unevenness due to color mixing

Using a line printer charged with a set of the magenta and cyan recording liquids of the Examples and the Comparative Examples, the magenta color and the cyan color were superposed one on the other to effect printing to a blue all-over color. The degree of color unevenness (degree of unevenness of color density) of the all-over blue image was evaluated as follows by visual check.

(Rank and Standard for Evaluation)

◎ No color unevenness is seen in the all-over blue image
○ Although a color unevenness of an extremely small size is seen in the all-over blue image, it is not detrimental to the image quality
Δ There are many small color unevennesses
× Color unevennesses of larger sizes are seen in the entire image such that the image quality is lowered severely

Table 7

| EO$_l$/PO$_m$/EO$_n$ | | | | | |
|---|---|---|---|---|---|
| Examples and Comparative Examples | Ejection stability | | Optical density | Boundary bleeding | All-over color unevennesses due to color mixing |
| | Foaming and disturbances in image | Intermittent ejection | | | |
| Example 1 | O | O | 1.12 | ○ | ○ |
| Example 2 | O | O | 1.24 | ◎ | ◎ |
| Example 3 | O | O | 1.15 | O | O |
| Example 4 | O | O | 1.13 | O | O |
| Example 5 | O | O | 1.24 | ◎ | ◎ |
| Example 6 | ○ | O | 1.14 | O | O |
| Example 7 | ○ | O | 1.23 | ◎ | ◎ |
| Example 8 | ○ | O | 1.13 | O | O |
| Example 9 | ○ | ○ | 1.13 | O | ○ |
| Comparative Example 1 | × | Δ | 1.07 | × | Δ |
| Comparative Example 2 | × | Δ | 1.06 | O | Δ |
| Comparative Example 3 | × | Δ | 1.05 | × | Δ |
| Comparative Example 4 | × | Δ | 1.00 | × | × |
| Comparative Example 5 | × | Δ | 1.10 | × | Δ |
| Comparative Example 6 | Δ | Δ | 1.08 | Δ | Δ |

Table 8

| EO$_p$/PO$_q$/EO$_r$ | | | | | |
|---|---|---|---|---|---|
| Examples and Comparative Examples | Ejection stability | | Optical density | Boundary bleeding | All-over color unevennesses due to color mixing |
| | Foaming and disturbances in image | Intermittent ejection | | | |
| Example 10 | ○ | ○ | 1.13 | ○ | ○ |
| Example 11 | ○ | ○ | 1.23 | ◎ | ◎ |
| Example 12 | ○ | ○ | 1.16 | ○ | ○ |
| Example 13 | ○ | ○ | 1.24 | ◎ | ◎ |
| Example 14 | ○ | ○ | 1.14 | ○ | ○ |
| Example 15 | ○ | ○ | 1.14 | ○ | ○ |
| Example 16 | ○ | ○ | 1.13 | ○ | ○ |

Table continued

| | EO$_p$/PO$_q$/EO$_r$ | | | | |
|---|---|---|---|---|---|
| Examples and Comparative Examples | Ejection stability | | Optical density | Boundary bleeding | All-over color unevennesses due to color mixing |
| | Foaming and disturbances in image | Intermittent ejection | | | |
| Comparative Example 7 | Δ | Δ | 1.09 | × | Δ |
| Comparative Example 8 | Δ | Δ | 1.08 | Δ | Δ |
| Comparative Example 9 | ○ | Δ | 0.99 | Δ | × |

Table 9

| | EO$_x$/PO$_y$/EO$_z$ | | | | |
|---|---|---|---|---|---|
| Examples and Comparative Examples | Ejection stability | | Optical density | Boundary bleeding | All-over color unevennesses due to color mixing |
| | Foaming and disturbances in image | Intermittent ejection | | | |
| Example 17 | ○ | ○ | 1.12 | ○ | ○ |
| Example 18 | ○ | ○ | 1.24 | ◎ | ◎ |
| Example 19 | ○ | ○ | 1.15 | ○ | ○ |
| Example 20 | ○ | ○ | 1.14 | ○ | ○ |
| Example 21 | ○ | ○ | 1.23 | ◎ | ◎ |
| Example 22 | ○ | ○ | 1.14 | ○ | ○ |
| Example 23 | ○ | ○ | 1.15 | ○ | ○ |
| Example 24 | ○ | ○ | 1.21 | ◎ | ◎ |
| Example 25 | ○ | ○ | 1.13 | ○ | ○ |
| Comparative Example 10 | × | Δ | 1.08 | × | Δ |
| Comparative Example 11 | Δ | Δ | 1.05 | Δ | × |
| Comparative Example 12 | Δ | Δ | 1.05 | Δ | × |

Table 10

| Examples and Comparative Examples | Ejection stability | | Optical density | Boundary bleeding | All-over color unevennesses due to color mixing |
|---|---|---|---|---|---|
| | Foaming and disturbances in image | Intermittent ejection | | | |
| Comparative Example 13 | × | Δ | 1.07 | × | Δ |

Table continued

| Examples and Comparative Examples | Ejection stability | | Optical density | Boundary bleeding | All-over color unevenness due to color mixing |
|---|---|---|---|---|---|
| | Foaming and disturbances in image | Intermittent ejection | | | |
| Comparative Example 14 | Δ | Δ | 1.09 | Δ | Δ |
| Comparative Example 15 | × | × | 1.00 | Δ | × |
| Comparative Example 16 | Δ | Δ | 1.04 | × | Δ |

It may be seen from Tables 7 to 10 that, with the recording liquid of the present invention, shown in any of Examples 1 to 25, ejection stability is optimum through suppression of foaming in the recording liquid, and the intermittent ejection characteristics are unobjectionable, while the optical density is high, such that it is possible to improve the state of boundary bleeding and all-over color unevennesses ascribable to color mixing. In particular, with the Examples 2, 5, 7, 11, 13, 18, 21 and 24, containing the ethylene oxide/ alkylene oxide block copolymer and optimized as to the dynamic surface tension of the recording liquid, the state of optical density, boundary bleeding and all-over color unevennesses due to color mixing may be improved further.

Conversely, with the recording liquids of the Comparative Examples 1 to 16, not containing the ethylene oxide/ alkylene oxide block copolymer or which is not optimum in the dynamic surface tension of the recording liquid, the image is disturbed and low in optical density, while suffering from boundary bleeding or all-over color unevennesses due to color mixing.

The present invention is not limited to the above-described embodiments and, as may be apparent to those having an ordinary skill in the art, various changes, substitutions or equivalents may be attempted without departing from the scope of the invention as defined in the claims.

Industrial Applicability

According to the present invention, there may be provided a recording liquid superior in ejection stability and exhibiting high optical density on multi-color recording on ordinary paper sheets, such as copy paper sheets of report pads, while enabling high-quality recording free of boundary bleeding or all-over color unevennesses otherwise caused by color mixing, and a recording method employing the recording liquid.

**Claims**

1. A recording liquid essentially composed of water, a coloring material, an organic solvent and a surfactant, which surfactant contains at least one of an ethylene oxide/propylene oxide block copolymer or an ethylene oxide/ butylene oxide block copolymer represented by the following chemical formulas (1) to (3):

$$HO(C_2H_4O)_l(C_3H_6O)_m(C_2H_4O)_nH \qquad (1)$$

where 1, m and n are integers such that $0 < 1 + n \leq 10$ and $16 \leq m \leq 31$ and the content of the ethylene oxide unit in a molecule is 10 to 20 wt%;

$$HO(C_2H_4O)_p(C_4H_8O)_q(C_2H_4O)_rH \qquad (2)$$

where p, q and r are integers such that $0 < p + r \leq 13$ and $13 \leq q \leq 24$ and the content of the ethylene oxide unit in a molecule is 10 to 30 wt%;

$$HO(C_3H_6O)_x(C_2H_4O)_y(C_3H_6O)_zH \qquad (3)$$

where x, y and z are integers such that $12 \leq x + z \leq 31$ and $0 < y \leq 18$ and the content of the ethylene oxide unit in a molecule is 20 to 30 wt%.

2. The recording liquid according to claim 1 wherein the dynamic surface tension at 25$\underline{\text{o}}$C satisfies the following equation (i):

$$35 \leq \gamma_{20} \text{ and } \gamma_i \leq 40$$

$$\cdots\cdots(i)$$

where $\gamma_{20}$ (mN/m) and $\gamma_i$ (mN/m) denote the dynamic surface tension at 20 Hz and that at 1 Hz, respectively.

3. A recording method for effecting recording by ejecting micro-sized droplets of the recording liquid via a plurality of nozzles, depending on recording signals, for depositing the liquid droplets on a recording support, wherein a recording liquid essentially composed of water, a coloring material and a surfactant is used, said surfactant containing at least one of an ethylene oxide/propylene oxide block copolymer or an ethylene oxide/ butylene oxide block copolymer represented by the following chemical formulas (1) to (3):

$$HO(C_2H_4O)_l(C_3H_6O)_m(C_2H_4O)_nH \qquad (1)$$

where 1, m and n are integers such that $0 < 1 + n \leq 10$ and $16 \leq m \leq 31$ and the content of the ethylene oxide unit in a molecule is 10 to 20 wt%;

$$HO(C_2H_4O)_p(C_4H_8O)_q(C_2H_4O)_rH \qquad (2)$$

where p, q and r are integers such that $0 < p + r \leq 13$ and $13 \leq q \leq 24$ and the content of the ethylene oxide unit in a molecule is 10 to 30 wt%;

$$HO(C_3H_6O)_x(C_2H_4O)_y(C_3H_6O)_zH \qquad (3)$$

where x, y and z are integers such that $12 \leq x + z \leq 31$ and $0 < y \leq 18$ and the content of the ethylene oxide unit in a molecule is 20 to 30 wt%.

4. The recording method according to claim 3 wherein the recording liquid satisfies the following equation (i):

$$35 \leq \gamma_{20} \text{ and } \gamma_i \leq 40$$

$$\cdots\cdots(i)$$

where $\gamma_{20}$ (mN/m) and $\gamma_i$ (mN/m) denote the dynamic surface tension at 20 Hz and that at 1 Hz, respectively.

# EP 1 630 210 A1

| INTERNATIONAL SEARCH REPORT | International application No. |
|---|---|
| | PCT/JP2004/007446 |

**A. CLASSIFICATION OF SUBJECT MATTER**
Int.Cl$^7$ C09D11/00, B41M5/00, B41J2/01

According to International Patent Classification (IPC) or to both national classification and IPC

**B. FIELDS SEARCHED**

Minimum documentation searched (classification system followed by classification symbols)
Int.Cl$^7$ C09D11/00-11/20, B41M5/00, B41J2/01-2/21

Documentation searched other than minimum documentation to the extent that such documents are included in the fields searched
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
WPI(DIALOG)

**C. DOCUMENTS CONSIDERED TO BE RELEVANT**

| Category* | Citation of document, with indication, where appropriate, of the relevant passages | Relevant to claim No. |
|---|---|---|
| X | JP 8-333533 A (Canon Inc.), 17 December, 1996 (17.12.96), Claims; Par. Nos. [0029] to [0049]; examples (Family: none) | 1-4 |
| X | JP 9-111165 A (Canon Inc.), 28 April, 1997 (28.04.97), Claims; Par. Nos. [0016] to [0041]; examples & US 5952414 A & EP 769534 A2 | 1-4 |
| X | JP 2001-254037 A (Ricoh Co., Ltd.), 18 September, 2001 (18.09.01), Claims; Par. Nos. [0039] to [0106]; examples & US 6613136 B1 | 1-4 |

| ☒ | Further documents are listed in the continuation of Box C. | ☐ See patent family annex. |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 August, 2004 (17.08.04) | 31 August, 2004 (31.08.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

17

| | **INTERNATIONAL SEARCH REPORT** | International application No. |
|---|---|---|
| | | PCT/JP2004/007446 |

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2004-10870 A (Sharp Corp.), 15 January, 2004 (15.01.04), Claims; examples (Family: none) | 1-4 |

Form PCT/ISA/210 (continuation of second sheet) (January 2004)